# EUROPÄISCHE PATENTSCHRIFT

(11) **EP 0 373 300 B1**
(45) Veröffentlichungstag und Bekanntmachung des Hinweises auf die Patenterteilung: **07.02.1996**
(21) Anmeldenummer: 89115970.9
(22) Anmeldetag: 30.08.1989
(51) Int. Cl.: C08J 3/20, C08J 3/22, C08L 23/04, G03C 1/79, B29B 7/48, C09C 3/10

(54) **Verfahren zur Herstellung eines Kunststoffkonzentrats**
Process for preparing a master batch
Procédé pour la préparation d'un concentré polymérique

(30) Priorität: 09.12.1988 DE 3841457
(43) Veröffentlichungstag der Anmeldung: 20.06.1990
(73) Patentinhaber: Felix Schoeller jr. Papierfabrik GmbH & Co. KG, D-49086 Osnabrück (DE)
(72) Erfinder: Dethlefs, Ralf-Burckhard, Dr. Dipl.-Chem., D-4500 Osnabrück (DE); Scholz, Bernd, Dipl.-Ing., D-4500 Osnabrück (DE); Wysk, Wolfram, Dipl.-Ing., D-4513 Belm (DE)
(74) Vertreter: Minderop, Ralph H., Dr. rer. nat.

(56) Entgegenhaltungen:
- DE-A- 3 132 107
- DE-A- 3 404 859
- US-A- 4 407 896
- US-A- 4 650 747
- MODERN PLASTICS INTERNATIONAL. vol. 14, no. 1, Januar 1984, LAUSANNE CH Seiten42 - 44; D. BROWNBILL: "Improved compounding and mixing equipment cutsproduction costs"

## Beschreibung

Die Erfindung betrifft ein Verfahren zur Herstellung von Pigment und/oder Füllstoff enthaltende Kunststoffkonzentrate zur Herstellung einer Polyolefinbeschichtungsmasse für fotografische Schichtträger.

Insbesondere betrifft die Erfindung die Verwendung des Doppelschneckenextruders mit Entgasung zur Herstellung fotografischer Pigment-Kunststoffkonzentrate.

Wasserfeste fotografische Schichtträger bestehen aus Kunststoffilm oder aus Basispapier mit vorzugsweise auf beiden Seiten unter Verwendung des Extrusionsverfahrens aufgebrachter Kunstharzbeschichtungsmasse, die aus Polyolefinen besteht und lichtreflektierendes Weißpigment sowie gegebenenfalls Farbpigmente, optische Aufheller und/oder andere Zusätze wie Antistatika, Dispergierhilfsmittel, Antioxidantien, Trennmittel usw. enthalten kann.

Zu den für die Extrusionsbeschichtung fotografischer Basispapiere geeigneten, mit Titandioxid-Pigment angereicherten Polyolefinen gehören z. B. Polyehtylen in seiner LDPE- oder HDPE-Form, Ethylen-α-Olefin-Copolymerisate sog. LLDPE, Polypropylen sowie Mischungen daraus.

Das Titandioxid kann in seiner Rutil- und/oder Anatasmodifikation, aber auch als eine anorganisch und/oder organisch oberflächenbehandelte Form angewandt werden. Die anorganische Oberflächenbehandlung kann mit Al₂O₃, SiO₂, Mg (OH)₂ oder Zirkoaluminaten und die organische Oberflächenbehandlung mit Organopolysiloxanen, Silanen, mehrwertigen Alkoholen, Alkyltitanaten, Alkanolaminen usw. erfolgen.

Neben Titandioxid finden auch andere Pigmente oder Füllstoffe Verwendung wie Ultramarin, Kobaltblau, Kobaltviolett, Ruß, Al₂O₃ , SiO₂ oder oberflächenbehandeltes Calciumcarbonat.

Es ist auch bekannt, daß die Schärfe eines Bildes mit dem Gehalt des Titandioxids in der Polyolefinschicht des fotografischen Trägers zusammenhängt. Ein höherer Titandioxid-Gehalt in der Polyolefinschicht ergibt einen höheren Schärfegrad des Bildes.

Voraussetzung für die volle Entfaltung der Pigmenteigenschaften im Kunststoff sowie für eine störungsfreie Verarbeitung ist die vollständige Zerteilung der Pigmentagglomerate und die homogene Verteilung der Pigmentteile. Dies ist besonders wichtig bei der Herstellung dünner Beschichtungen (25 - 50 µ), bei denen TiO₂ Konzentrationen bis 20 % oder mehr erforderlich sind. In dünnen Polyolefinschichten können Pigmentagglomerate einerseits die gesamte Lichtreflexion verringern, andererseits zur Loch- und Schlitzbildung und schließlich zu Folienabrissen führen. Eine gute Dispergierung ist daher notwendig.

Zur Pigmentierung von Polyolefinen verwendet man daher vorzugsweise nicht die reinen Pigmente, sondern Pigment-Kunststoffkonzentrate, in denen das Pigment bereits dispergiert vorliegt. Die Herstellung solcher Konzentrate erfolgt in einem speziellen Arbeitsgang mit Hilfe von Knetern, Walzwerken oder Mischern, wobei die Erhöhung der Scherkräfte eine Verbesserung des Dispergierzustandes bewirken soll.

Nach dem heutigen Stand der Technik werden Kunststoffkonzentrate nach verschiedenen Methoden hergestellt (z.B. US P 46 50 747, JP 60 75 832). Alle Methoden zeichnen sich aus durch die Anwendung von Dispergierhilfsmitteln (Salze bzw. Ester höherer Fettsäuren, wie z. B. Stearate) und die Verwendung oberflächenbehandelter Titandioxide. Bei allen Methoden werden Kneter und Mixer, vorzugsweise Banbury-Mixer, eingesetzt.

Die nach den oben erwähnten Methoden hergestellten Kunststoffkonzentrate zeichnen sich trotz Anwendung der o. g. Hilfsmittel immer noch durch eine inhomogene Konsistenz aus. Vermutlich werden die Pigmentpartikel nur unvollständig umhüllt und dadurch keine optimale Dispergierbarkeit gewährleistet.

Polare Pigmente wie z. B. TiO₂ neigen speziell in unpolaren Polymeren wie Polyolefinen wegen großer Oberflächenenergie zu einer ausgeprägten Reagglomeration, insbesondere bei Pigmentkonzentrationen größer als 15 Gew.-%. Damit ist der Konzentration der angewandten Pigmente eine Grenze gesetzt, so daß die gewünschten bzw. erforderlichen Konzentrationen oft nicht erreicht werden können. Dadurch treten weiterhin Schwierigkeiten bei der Extrusionsbeschichtung auf wie zu hoher Siebrückstand, Verstopfung der Düsen sowie Löcher und Risse in der Folie.

Die zum Stand der Technik bei der Herstellung fotografischer Masterbatche (Kunststoffkonzentrate) gehörenden Kneter und Mixer arbeiten in der Regel diskontinuierlich und ohne Entgasung. Diese wurden bis jetzt deshalb bevorzugt angewandt, weil die Verabeitungstemperaturen im Bereich 120 - 140° C liegen und dadurch die thermische Beanspruchung des Kunsttoffes nicht zu hoch ist.

Der herkömmliche Banbury-Mixer z. B. besteht aus zwei spiralförmigen, in entgegengesetzter Richtung rotierenden Schaufeln, die sich in einer Mischkammer befinden. Nach abeschlossenem Mischvorgang (ca. 2 Min.) wird die Kammer von dem entstandenen Masterbatch entleert.

Zusatzstoffe wie Füllstoffe oder Pigmente enthalten normalerweise Feuchtigkeit, Luft und/oder oberflächenaktive Substanzen, die zu einer Qualitätsminderung des Masterbatches führen. Die chemisch gebundene Restfeuchte an der Oberfläche der Pigmentpartikel und die Feuchtigkeit in den Poren führen z. B. bei der Extrusionsbeschichtung zu sog. "Wasserzöpfen". Weiterhin dringt das sog. "Kneteröl", das zur Schmierung von außen in die Lager der Kneterschaufeln gepreßt wird, in die Kunststoffmischung ein. Bei späterer Extrusionsbeschichtung dampft dieses Öl aus, kondensiert an Maschinenteilen, tropft auf die Papierbahn und führt zu Störungen der Polyethylen-Haftung. Allgemein behindern alle aus Kunststoffen oder Kunststoffmischungen stammende flüchtige Bestandteile das einwandfreie Benetzen von Pigment- oder Füllstoffpartikeln und führen zu porenhaltigem Granulat, was verminderte Qualität der Oberflächenstruktur bei späterer Beschichtung zur Folge hat.

Darüberhinaus können die angewandten Dispergierhilfsmittel ausschwitzen und sich auf der Oberfläche niederschlagen, was zu späteren Schwierigkeiten bei der Weiterverarbeitung des beschichteten Trägermaterials führt, z. B. matte Stellen auf der Oberfläche, verminderte Haftung zwischen dem Trägermaterial und einer lichtempfindlichen Emulsion.

Aufgabe der Erfindung ist es daher, ein Pigment und/oder Füllstoff enthaltendes Kunststoffkonzentrat herzustellen, mit dem es gelingt, eine einwandfreie Beschichtungsmasse für fotografische Schichtträger mit einer gleichmäßigen Verteilung des Pigments oder Füllstoffes herzustellen. Die Beschichtungsmasse soll eine störungsfreie Verarbeitung gewährleisten.

Die Aufgabe wird gelöst durch ein Verfahren zur Herstellung eines Kunststoffkonzentrats, enthaltend Pigment und/oder Füllstoff, Polyethylen und gegegebenenfalls Ethylencopolymerisat, dadurch gekennzeichnet, daß es mittels eines Doppelschneckenextruders mit Entgasung durchgeführt wird.

Gemäß einer bevorzugten Ausführungsform wird ein Doppelschneckenextruder mit zwei gleichsinnig drehenden ineinander greifenden Schnecken eingesetzt, es können aber auch gegenläufige, tangierende Doppelschneckenextruder zum Einsatz kommen. Die Entgasung kann in einer oder mehreren Stufen erfolgen.

Überraschenderweise hat sich herausgestellt, daß neben einer guten und zu erwartenden Entgasung des Kunststoffkonzentrats und damit verbundener Eliminierung der eingangs erwähnten Schwierigkeiten wie "Wasserzöpfe" oder Bahnverschmutzung durch Kneteröl und ausgeschwitzte Zusatzstoffe eine sehr gute Dispergierung der Pigmentteilchen ohne Agglomeratbildung erfolgte. Die gute Dispergierung erscheint um so überraschender, da auf den Zusatz von Dispergiermitteln verzichtet werden kann.

Ein weiterer Überraschungseffekt liegt in der Tatsache, daß trotz Befürchtungen bezüglich der hohen, im Doppelschneckenextruder herrschenden Temperaturen (250 - 300°C) ein Masterbatch mit geringer Gelkörperbildung erzeugt werden kann. Im Gegenteil, die Anzahl der gebildeten Gelkörper ist nahezu um die Hälfte niedriger, als es bei den herkömmlich hergestellten fotografischen Masterbatchen üblich ist.

Die erfindungsgemäßen Kunststoffkonzentrate können einen Pigment- und/oder Füllstoffgehalt von 30 bis 80 Gew.-% aufweisen.

Die erfindungsgemäßen Kunststoffkonzentrate können kontinuierlich auf zwei Arbeitsweisen hergestellt werden. Dies soll anhand folgender Beispiele näher erläutert werden.

### Beispiele

### Beispiel 1

Ein LD-Polyethylengranulat (Escorene LD 251, Fa. Exxon Chemicals) mit der Dichte 0,915 g/cm' und MFI (190° C) = 8,0 g/10 min wurde kontinuierlich zusammen mit Titandioxid (Ti-pure R 101, Fa. Du Pont) durch den Einfüllschacht des Doppelschneckenextruders (Typ ZSK 30) mit zwei gleichläufig ineinandergreifenden Schnecken aufgegeben.

Die TiO₂-Konzentration betrug:
Versuch 1a - 30 Gew.-%
Versuch 1b - 50 Gew.-%
Versuch 1c - 70 Gew.-%

Die Entgasung erfolgte in der Mitte der Schnecke durch Anschließen einer Vakuumpumpe am Entgasungsschacht.

Folgende Arbeitsparameter wurden eingehalten:

| Versuch | Temperatur, °C | | | Verweilzeit, min | Druck, mbar |
|---|---|---|---|---|---|
| | Eingang d. Extruders | Mischzone | Ausgang d. Extruders | | |
| 1a | 130 | 260 | 290 | 5 | |
| 1b | 130 | 260 | 290 | 5 | 5-200 |
| 1c | 130 | 265 | 295 | 5 | |

Nach abgeschlossenem Mischvorgang wurde das erzeugte Kunststoffkonzentrat strangförmig in bekannter Weise granuliert.

### Beispiel 2

Ein LLD-Polyethylengranulat (Dowlex 2035, Fa. Dow Chemical) mit der Dichte 0,919 g/cm³ und MFI (190° C) = 6 g/10 min wurde kontinuierlich zusammen mit 40 Gew.-% Titandioxid (Ti-pure R 101, Fa. Du Pont) durch den Einfüllschacht des Doppelschneckenextruders (Typ ZSK 30) mit zwei gleichläufig ineinandergreifenden Schnecken aufgegeben.

Folgende Arbeitsparameter wurden eingehalten:

| | |
|---|---|
| Temperatur am Eingang des Extruders: | ca. 130° C |
| Temperatur in der Mischzone: | ca. 270° C |
| Temperatur am Ausgang des Extruders: | ca. 300° C |
| Verweilzeit: | 5 Minuten |
| Druck: | 5-200 mbar |

Die anschließende Granulierung des entstandenen PE-Konzentrats erfolgte in bekannter Weise.

### Beispiel 3

Eine Mischung aus LD-Polyethylengranulat (Escorene LD 251, Fa. Exxon Chemicals) mit der Dichte 0,915 g/cm³, MFI (190° C) = 8 g/10 min und HD-Polyehtylengranulat (Stamylex 9119 SF, Fa. DSM) mit der Dichte 0,964 g/cm³, MFI (190°C) = 11 g/10 min wurde kontinuierlich zusammen mit 40 Gew.-% Titandioxid (Rutil 2073, Fa. Kronos Titan GmbH) durch den Einfüllschacht des Doppelschneckenextruders (Typ ZSK 30) mit zwei gleichläufig ineinandergreifenden Schnecken aufgegeben. Der Mischvorgang und die anschließende Granulierung des entstandenen PE-Konzentrats erfolgten bei den gleichen Arbeitsparametern wie im Beispiel 2.

### Beispiel 4

Ein LD-Polyethylengranulat (Escorene LD 251, Fa. Exxon Chemicals) mit der Dichte 0,915 g/cm³ und MFI (190° C) = 8 g/10 min wurde kontinuierlich durch den Einfüllschacht des Doppelschneckenextruders (Typ ZSK 30) mit zwei gleichläufig ineinandergreifenden Schnecken aufgegeben. Die Titandioxidzugabe (Anatas 1012, Fa. Kronos Titan GmbH) in einer Menge von 40 Gew.-% erfolgte an einer anderen Stelle der Extruderschnecke.

Folgende Arbeitsparameter wurden eingehalten:

| | |
|---|---|
| Temperatur am Eingang des Extruders: | ca. 130° C |
| Temperatur in der Mischzone: | ca. 260° C |
| Temperatur am Ausgang des Extruders: | ca. 290° C |
| Verweilzeit: | 5 Minuten |
| Druck: | 5-200 mbar |

Die anschließende Granulierung des entstandenen PE-Konzentrats erfolgte in bekannter Weise.

### Beispiel 5

Ein LD-Polyethylengranulat (Escorene LD 251, Fa. Exxon Chemicals) mit der Dichte 0,915 g/cm³ und MFI (190° C) = 8 g/10 min wurde kontinuierlich zusammen mit 40 Gew.-% Kobaltviolett (Fa. Ferro) durch den Einfüllschacht des Doppelschneckenextruders (Typ ZSK 30) mit zwei gleichläufig ineinandergreifenden Schnecken aufgegeben.

Die Arbeitsparameter des Mischvorgangs, die Entgasung sowie die anschließende Granulierung sind wie im Beispiel 4.

### Prüfung der in Beispiel 1 bis 5 erhaltenen Polyethylenkonzentrate

Die erfindungsgemäßen Polyethylenkonzentrate wurden geprüft und mit einem herkömmlich hergestellten Konzentrat verglichen.

Folgende Prüfmethoden wurden angewandt:

### 1. Filtra-Test am Konzentrat

200 g des erfindungsgemäßen Polyethylenkonzentrats werden im Technikumextruder bei einer Schmelztemperatur von 300° C durch ein vorgewogenes Sieb von 25 µm Maschinenweite geschickt. Mit reinem Polyolefinharz wird lange weiterextrudiert, bis das ganze pigmenthaltige Material das Sieb passiert hat. Nach dem Ausglühen des Siebes bei 800° C wird der Siebrückstand abgewogen und auf mg Rückstand/1 kg TiO₂ umgerechnet.

### 2. Zahl der Agglomerate in der Beschichtung

Das erfindungsgemäße TiO₂-Polyethylenkonzentrat wird mit reinem Polyethylen so weit verdünnt, daß eine Mischung mit 20 Gew.-% TiO₂ entsteht. Das erfindungsgemäße Kobaltviolett-Polyethylenkonzentrat wird mit reinem Polyethylen zu einer Mischung mit 2 Gew.-% Kobaltviolett verdünnt.

Damit wird eine Beschichtung mittels Schmelzextruders bei 300° C Schmelztemperatur und 20 m/min Maschinengeschwindigkeit auf 25 cm Bahnbreite durchgeführt.

Im Durchlicht werden an 1 m des beschichteten Papiers die Pigmentagglomerate ausgezählt, die ohne Lupe als dunkle Punkte auf einem Leuchttisch erkennbar sind. Diese Zahl wird als Aggl./m angegeben.

### 3. Gelkörperniveau in der Beschichtung

Die erfindungsgemäßen Polyehtylenkonzentrate werden, wie bereits erwähnt, mit reinem Polyethylen verdünnt (s. Pkt. 2). Damit wird eine Beschichtung mittels Schmelzextruders bei 300° C Schmelztemperatur und 20 m/min Maschinengeschwindigkeit auf 25 cm Bahnbreite durchgeführt.

Im Schräglicht werden an 1 m des beschichteten Papiers die Gelkörper ausgezählt, die als kleine Erhöhungen erkennbar sind. Diese Zahl wird als Gelkörper /m angegeben.

Bei Gelkörpern handelt es sich um nicht aufgeschmolzene Polyethylenpartikel, die in der Regel hochmolekular sind oder aus vernetzten Anteilen bestehen.

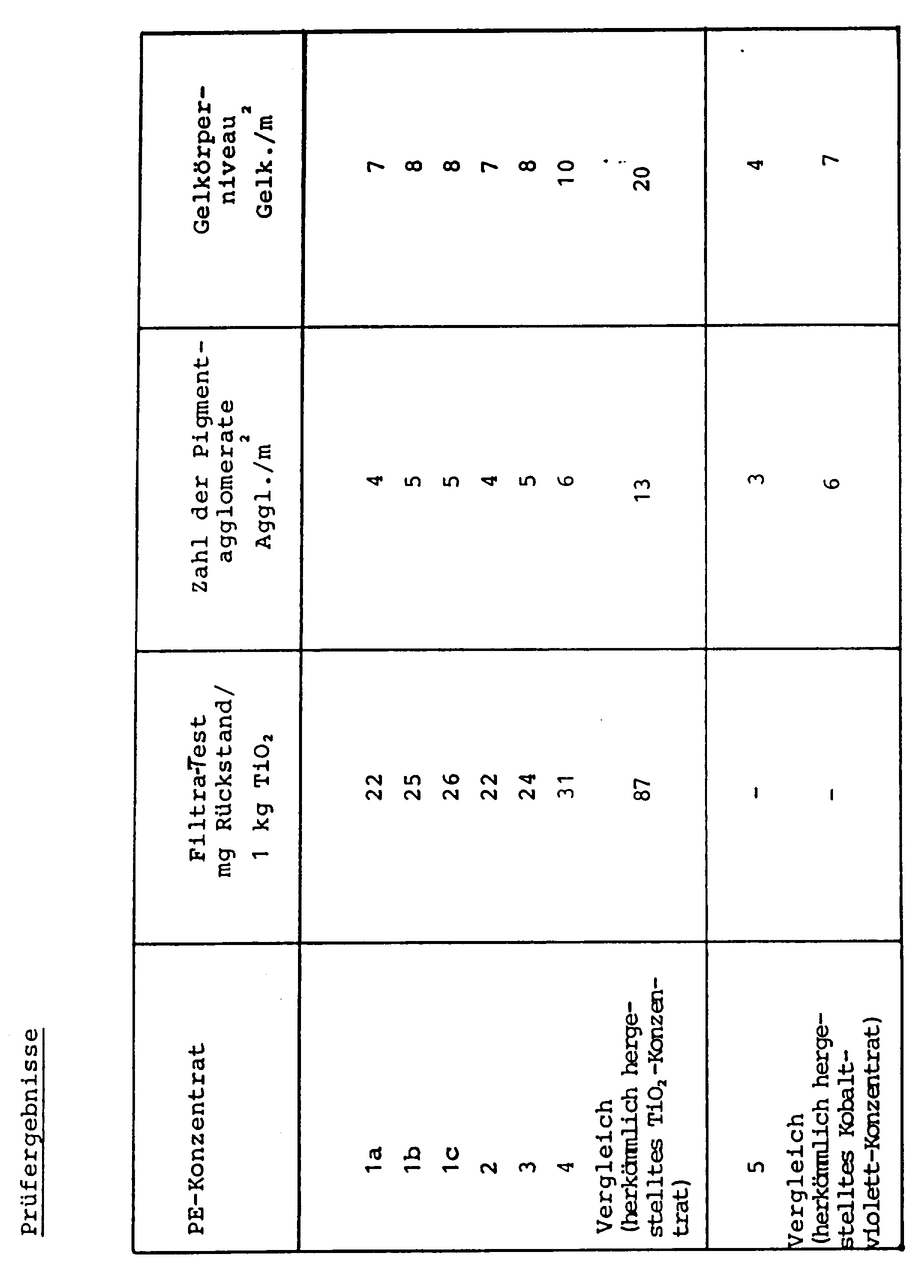

## Patentansprüche

1. Verfahren zur Herstellung eines Kunststoffkonzentrats, enthaltend Pigment und/oder Füllstoff, Polyethylen und gegebenenfalls Ethylencopolymerisat, dadurch gekennzeichnet, daß es mittels eines Doppelschneckenextruders mit Entgasung durchgeführt wird.

2. Verfahren nach Anspruch 1, dadurch gekennzeichnet, daß das Pigment aus der Gruppe der Titandioxid-Pigmente, Kobaltpigmente, Ruß oder Mischungen aus diesen ist.

3. Verfahren nach Anspruch 1, dadurch gekennzeichnet, daß das Titandioxid ein Titandioxid in Rutil- oder Anatas-Form oder Rutil- und Anatas-Form ist.

4. Verfahren nach Anspruch 1, dadurch gekennzeichnet, daß die Oberfläche der Titandioxidpartikel unbehandelt oder behandelt ist.

5. Verfahren nach Anspruch 1, dadurch gekennzeichnet, daß die Oberfläche der Titandioxidpartikel anorganisch oder organisch oder anorganisch und organisch behandelt ist.

6. Verfahren nach Anspruch 1, dadurch gekennzeichnet, daß das Polyethylen ein LDPE oder HDPE und das Ethylencopolymerisat ein LLDPE ist.

7. Verfahren nach Anspruch 1, dadurch gekennzeichnet, daß es mittels eines Doppelschneckenextruders mit gleichläufigen ineinandergreifenden Schnecken mit einstufiger oder mehrstufiger Entgasung hergestellt ist.

## Claims

1. Process for preparation of a plastic concentrate, containing a pigment and/or filler, polyethylene and optionally a ethylene copolymerisate, characterized in that it is produced by means of a double screw extruder with degassing.

2. Process according to claim 1, characterized in that the pigment is from the group of titanium dioxide pigments, cobalt pigments, carbon black or mixtures thereof.

3. Process according to claim 1, characterized in that the titanium dioxideis a titanium dioxide in rutile or anatase form, or in both rutile and anatase form.

4. Process according to claim 1, characterized in that the surface of the titanium dioxide particles is either untreated or treated.

5. Process according to claim 1, characterized in that the surface of the titanium dioxide particles is treated inorganically or organically, or both inorganically and organically.

6. Process according to claim 1, characterized in that the polyethylene is an LDPE or HDPE, and the ethylene copolymerisate is an LLDPE.

7. Process according to claim 1, characterized in that the concentrate is produced by means of a double screw extruder in a synchronous and interlocking manner, with one-stage or multiple-stage degassing.

## Revendications

1. Procédé de préparation d'un concentré de matière polymère contenant un pigment et/ou une matière de charge, du polyéthylène et éventuellement un copolymère d'éthylène, caractérisé en ce que le procédé est effectué dans une extrudeuse à double vis et avec dégazage.

2. Procédé selon la revendication 1, caractérisé en ce que le pigment est choisi dans le groupe formé des pigments de dioxyde de titane, des pigments de cobalt, de la suie ou des mélanges de ceux-ci.

3. Procédé selon la revendication 1, caractérisé en ce que le dioxyde de titane est un dioxyde de titane sous forme de rutile ou d'anatase, ou sous forme de rutile et d'anatase.

4. Procédé selon la revendication 1, caractérisé en ce que la surface des particules de dioxyde de titane est traitée ou non traitée.

5. Procédé selon la revendication 1, caractérisé en ce que la surface des particules de dioxyde de titane est traitée par voie inorganique, organique ou inorganique et organique.

6. Procédé selon la revendication 1, caractérisé en ce que le polyéthylène est un LDPE ou un HDPE et que le copolymère d'éthylène est un LLDPE.

7. Procédé selon la revendication 1, caractérisé en ce qu'il est réalisé dans une extrudeuse à double vis, à vis tournant dans le même sens et s'engageant l'une dans l'autre, avec dégazage en une ou plusieurs étapes.
